# EUROPEAN PATENT SPECIFICATION

(11) **EP 4 082 770 B1**
(45) Date of publication and mention of the grant of the patent: **06.05.2026**
(21) Application number: 22169311.2
(22) Date of filing: 21.04.2022
(51) Int. Cl.: B32B 7/027, B32B 3/08, B32B 5/18, B32B 9/04, B32B 15/04, B32B 15/12, B32B 29/08

(54) **MULTILAYER PLATE**
MEHRSCHICHTIGE PLATTE
PLAQUE MULTICOUCHE

(30) Priority: 29.04.2021 LU 500101
(43) Date of publication of application: 02.11.2022
(73) Proprietor: Variowell Development GmbH, 48155 Münster (DE)
(72) Inventor: KIRCHHOFF, Tobias, 48155 Münster (DE)
(74) Representative: Sonnenberg Harrison Partnerschaft mbB

(56) References cited:
- WO-A1-2018/067104
- CN-U- 206 374 263
- DE-A1- 102006 056 988
- US-A1- 2017 323 780
- US-A1- 2020 269 543

## Description

### Field of the Invention

The field of the invention concerns a multilayer plate with a sensitive upper surface.

### Prior Art

Multilayer plates comprising a plurality of layers with different properties are known in the art. For example, a multilayer plate is disclosed by the Chinese Utility Model CN 206245502 U. The multilayer plate comprises a protective layer, a fireproofing layer, a graphite fibre layer, a foamed aluminium layer, and a base layer which are bonded together by a bonding layer. The base layer is a fibre-reinforced resin layer and the protective layer is a PET (polyethylene terephthalate) layer.

A natural graphite/ aluminium composite heat sink is disclosed by the Chinese Utility Model CN 204968327 U. The heat sink comprises an aluminium foil layer and a graphite layer on the upper side and lower side of the aluminium foil layer. The aluminium foil layer comprises an aluminium substrate with a roughened layer on the upper side and the lower sides of the aluminium substrate. A surface of the aluminium foil layer is uniformly distributed with holes and the roughened layer is engaged with the graphite layer through the holes.

The Chinese utility CN 206374263 U model discloses a refractory graphite sheet comprising a graphite substrate and a plurality of folded sheets arranged side by side. The folded sheets have a heat dissipation pitch and are partially folded and overlapped by the graphite substrate. The outer surface of the graphite substrate comprises a protective film layer, a foam buffer layer, a first adhesive layer, a metal aluminium layer, a second adhesive layer, and a first graphite layer.

The German patent application No. DE 10 2006 056988 A1 describes a heat transfer composite including a plurality of pyrolytic graphite parts present in an amount greater than about 50% by volume of the heat transfer composite and a non-carbonaceous matrix holding the pyrolytic graphite parts in a consolidated mass. The matrix can be made of Aluminum.

The international patent application No. WO 2018/067104 A1 describes a multilayer housing including a first continuous layer comprising copper, plastic, graphene, aluminum, titanium, magnesium, or combinations thereof, a void layer on the first continuous layer, and a second continuous layer on the void layer.

The US patent application No. US 2020/269543 A1 describes a thermal insulation structure including a base plate and a thermal insulation component. The thermal insulation component is disposed on the base plate and is made of aerogel. The material of the base plate includes, for example, metal, that has a high thermal conductivity, such as copper or aluminum.

The US patent application No. US 2017/323780 A1 describes a thermally conductive sheet including a first graphite sheet and a second graphite sheet. The second graphite sheet is any of a second graphite sheet disposed to entirely overlap the first graphite sheet, a second graphite sheet disposed to partially overlap and to be shifted from the first graphite sheet, and a second graphite sheet disposed such that there is an interval of less than 5 mm between the second graphite sheet and the first graphite sheet. The graphite sheets are sandwiched between metal layers.

### Brief description of the invention

The present document describes a multilayer plate which comprises three layers. A carbon layer is covered by a metallic layer, and a substrate layer is covered at least partially by the carbon layer and the metallic layer. The metallic layer comprises a first zone and a second zone. The first zone is a zone defined by the carbon layer and has a void first space between the carbon layer and the metallic layer, and the second zone is a zone defined by carbon layer-free zone and has a void second space between the substrate layer and the metallic layer. The substrate layer is made of polyurethane flexible foam. The first zone has a higher thermal conductivity as the second zone.

A cooling effect is generated at the metallic layer when a hand is placed in the first zone compared to when the hand is placed in the second zone. This cooling effect is a result of the polyurethane flexible foam being a thermal insulator and therefore providing slower conduction of the heat in the second zone compared to the conduction of the heat in the first zone by the graphite layer. The thermal energy is absorbed by the layers of the first zone in a higher amount than the layers in the second zone.

In an aspect the carbon layer is a graphite plate with a thickness in a range of 2 millimetres and 4 millimetres. A thicker carbon layer has more capacity to absorb thermal energy than a thinner carbon layer.

The carbon layer can be made from different graphite composition and in one aspect is made from one of a highly oriented pyrolytic graphite or a super-oriented graphite. These specific graphite compositions are beneficial the cooling effect felt by contact by a user with the multilayer plate.

In an aspect, the polyurethane flexible foam has one of a density in a range of 40 kilograms/square-meter to 50 kilograms/square-meter or a firmness in a range of 5.0 kilopascals to 9.0 kilopascals. If the substrate layer is very soft, the metallic layer might be destroyed if the user applies too much external force onto the surface of the multilayer plate.

In an aspect the multilayer plate comprises a frame surrounding the substrate layer and partially the carbon layer. The frame holds the substrate layer and the carbon layer in place and ensures a rigid structure.

In an aspect the metallic layer is affixed on a circumferential surface of the frame. Hence, the metallic layer is affixed only on the circumferential surface. Furthermore, the metallic layer, carbon layer and substrate layer remain flexible relative to each other when the external force is applied, for example by the user.

In an aspect a first space between the carbon layer and the metallic layer in the first zone does not comprise any solid material or liquid material which would influence the thermal conductivity.

**In** an aspect, a second space between the substrate layer and the metallic layer in the second zone also does not comprise any solid material or liquid material would influence the thermal conductivity.

**In** an aspect the multilayer plate further comprises an additional layer made of corrugated board. The additional layer is arranged next to the carbon layer and the second zone is a zone defined by the additional layer.

The present document describes further a use of the multilayer plate as a demonstration display for demonstrating a differential thermal conductivity in the first zone compared to the second zone. The user can touch the first zone with the palm of one hand and the second zone with the palm of the other hand at the same time or in succession. The difference of the thermal conductivity in the two zones is felt by a cooler first zone and a warmer second zone.

The present document describes further a demonstration display for demonstrating a differential thermal conductivity in a first zone or a second zone comprising the multilayer plate. The multilayer plate comprises a carbon layer, covered by a metallic layer a substrate layer, covered at least partially by the carbon layer and the metallic layer, and wherein the metallic layer comprises the first zone and the second zone and wherein the first zone is a zone defined by the carbon layer and has a void first space between the carbon layer and the metallic layer and the second zone is a zone defined by carbon layer-free zone and has a void second space between the substrate layer and the metallic layer. The substrate layer is made of polyurethane flexible foam

The present document describes further a method for demonstrating a differential thermal conductivity in a first zone compared to a second zone of a multilayer plate. In a first step one or more body parts is/are placed on one of the first zone or the second zone. In a second step, a same one or a different one of the one or more body parts is/are placed on a different one of the first zone or the second zone of step one. In a third step, the effect of the placing of the one or more body parts on the first zone and the second zone is compared. The multilayer plate comprises a carbon layer, covered by a metallic layer, a substrate layer, covered at least partially by the carbon layer and the metallic layer, and wherein the metallic layer comprises the first zone and the second zone and wherein the first zone is a zone defined by the carbon layer and has a void first space between the carbon layer and the metallic layer and the second zone is a zone defined by carbon layer-free zone and has a void second space between the substrate layer and the metallic layer. The substrate layer is made of polyurethane flexible foam.

### Description of the figures

A more complete appreciation of the invention and many of the attendant advantages thereof will be readily obtained as the same becomes better understood by reference to the following detailed description when considered in connection with the accompanying figures.
Fig. 1 illustrates a schematic cross-sectional view of a multilayer plate.
Fig. 2 illustrates an exploded cross-sectional view of the multilayer plate of Fig. 1.
Fig. 3 illustrates a schematic view of a substrate layer.
Fig. 4 illustrates a flow-chart of a method for demonstrating a differential thermal conductivity in a first zone or a second zone of the multilayer plate.
Fig. 5 illustrates a schematic cross-sectional view of another aspect of a multilayer plate.
Fig. 6 illustrates a schematic cross-sectional view of another aspect of a multilayer plate.

### Detailed description of the invention

The invention is defined by the claims.

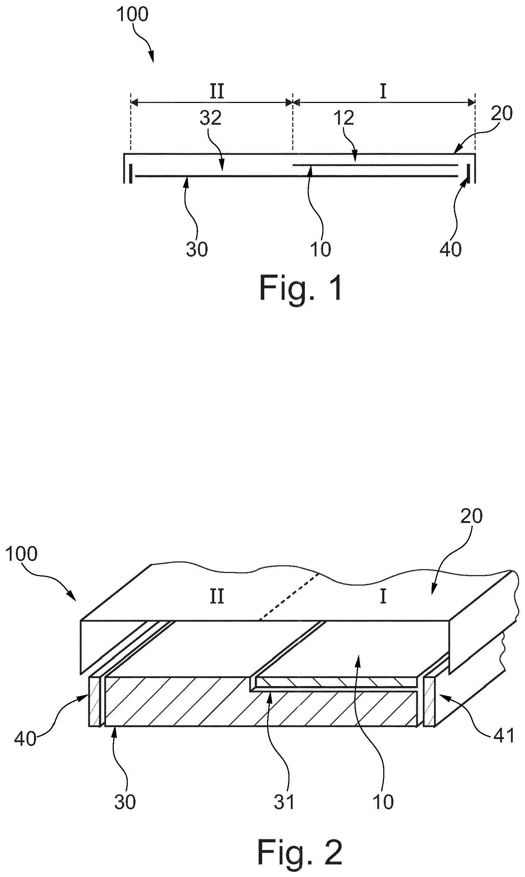

Fig. 1 is a schematic cross-sectional view of a multilayer plate 100. The multilayer plate 100 comprises a carbon layer 10, a metallic layer 20 and a substrate layer 30. The substrate layer 30 is partially covered by the carbon layer 10. The substrate layer 30 and the carbon layer 10 are surrounded by a frame 40. The frame 40 is affixed to the substrate layer 30 by one of an adhesive or a fastener. The frame 40 holds the substrate layer 30 and the carbon layer 10 in place and ensures that the carbon layer 10 stays in position relative to the substrate layer 30.

The substrate layer 30 and the carbon layer 10 are covered by the metallic layer 20. The metallic layer 20 comprises a first zone I and a second zone II. The first zone I is a zone defined by the carbon layer 20. The second zone II is a zone defined by a carbon layer-free zone. The first zone I defines a first space 12 between the carbon layer 10 and the metallic layer 20. The second zone II defines a second space 32 between the substrate layer 30 and the metallic layer 20. Both of the first space 12 and the second space 32 do not comprise any solid material or liquid material.

Fig. 2 is an exploded cross-sectional view of a part of the multilayer plate 100. The substrate layer has a recess 31 to accommodate the carbon layer 10. The recess 31 has the same thickness as the carbon layer 10. The metallic layer 20 covers the carbon layer 10, the substrate layer 30 and the frame 40. The metallic layer 20 is affixed on a circumferential surface 41 of the frame 40. The metallic layer 20 can be affixed to the circumferential surface 41 by one of an adhesive or a fastener.

The substrate layer 30 is made of a foam. In an aspect the substrate layer 30 is a polyurethane flexible foam. A property of the polyurethane flexible foam is its excellent thermal insulation. The polyurethane flexible foam may comprise different densities and firmnesses. In an aspect the substrate layer 30 comprises a density in a range of 20 kilograms/square-meter to 80 kilograms/square-meter. In another aspect the substrate layer 30 comprise a density in a range of 40 kilograms/square-meter to 50 kilograms/square-meter. In an aspect the substrate layer 30 comprises a firmness in a range of 2.0 kilopascals to 14.0 kilopascals. In another aspect the substrate layer 30 comprises a firmness in a range of 5.0 kilopascals to 9.0 kilopascals.

The carbon layer 10 comprises one of a graphite plate or a steel plate. If the carbon layer 10 is a graphite plate, the graphite plate comprises one of a highly oriented pyrolytic graphite or a super-oriented graphite. Highly oriented pyrolytic graphite is a highly pure and ordered form of synthetic graphite, which is characterised by a low mosaic spread angle, meaning that the individual graphite crystallites are well aligned with each other. The super-oriented graphite is similar to the highly oriented pyrolytic graphite with a more in-plane orientation of the graphite.

One property of graphite is its high thermal conductivity. The high thermal conductivity of the carbon layer 10 generates a cooling effect in the first zone I compared to the substrate layer 30 in the second zone II. Consequently, the first zone I has a higher thermal conductivity as the second zone II. When a user touches the first zone I of the metallic layer 20 with the palm of a hand, the heat of the hand is conducted away from the carbon layer 10 (thermal conductivity) which the user feels as a cooling effect. If, on the other hand, the user touches the second zone II of the metallic layer 20, the heat from the palm of the hand is only very slowly conducted away from the substrate layer 30 (thermal insulation) and a warming effect because of the body heat connecting with the metallic layer is noticeable.

The carbon layer 10 has a thickness of at least 1.5 millimetres. In an aspect the thickness of the carbon layer 10 is in a range of 2 millimetres and 4 millimetres. If the carbon layer 10 has a thickness of 4 millimetres, the cooling effect lasts longer than if the carbon layer 10 would have a thickness of 2 millimetres. The cooling effect will last longer if the thickness of the carbon layer 10 is larger because a thicker carbon layer 10 has more capacity to absorb thermal energy than a thinner carbon layer 10.

The metallic layer 20 is one of an aluminium foil, a copper foil or a steel foil. To cover and protect the carbon layer 10, the substrate layer 30 and the frame 40, the metallic layer 20 has characteristics such as good formability, low chemical sensitivity, low air and moisture permeability, a good thermal conductivity and a good cleanability. In an aspect the metallic layer 20 comprises a thickness in a range of 0.03 millimetres to 0.15 millimetres. In another aspect the metallic layer 20 has a thickness in a range of 0.05 millimetres to 0.1 millimetres.

**In** an aspect the metallic layer 20 comprises an imprint such as for example a sign or a message, indicative of where to place the palm of the hand(s) on the metallic layer 20 for noticing a maximum cooling effect.

The multilayer plate 100 can be used for various purposes. **In** an aspect the multilayer plate 100 is used as a demonstration display for demonstrating the different thermal conductivity in the first zone I compared to the second zone II to the consumer. **In** this respect, the multilayer panel 100 must have certain dimensions to accommodate the palms of the consumers.

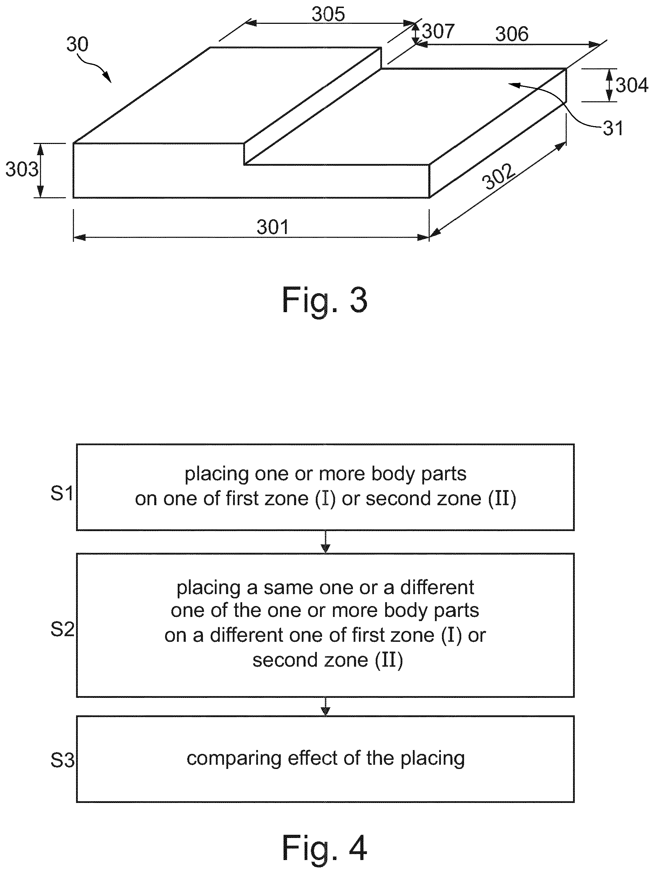

Fig. 3 illustrates a schematic view of an example of the substrate layer 30 of the demonstration display. The substrate layer 30 comprises different dimensions 301, 302, 303, 304, 305, 306 and 307. For example, the recess 31 for the carbon layer 10 has a surface defined by the dimensions 302 and 306, and a height defined by 307. **In** one example, the substrate layer 30 has the following values for the dimensions 301, 302, 303, 304, 305, 306 and 307, but these values are not limiting of the invention:

| dimension | value | | dimension | value |
|---|---|---|---|---|
| 301 | 288 mm | | 305 | 138 mm |
| 302 | 212 mm | | 306 | 150 mm |
| 303 | 37 mm | | 307 307 | 4 mm |
| 304 | 33 mm | | | |

In an aspect the multilayer plate 100 is used as component of an assembly wherein different thermal properties of the first zone I and the second zone II are desired.

A further example of the use of the assembly with the multilayer plate 10 is in a temperature regulating device which is used to regulate the temperature of a container for serving a food dish. The food dishes are not just hot or cold but may need a precise temperature before, during or after serving of food from the food dish. The temperature of the serving dish is a factor when serving, for example, tea based on Japanese customs. The temperature chosen is often a medium setting between hot and cold and is commonly reached by heating up the container or food dish and letting the container or food dish cool down again over a (long-lasting) period of time.

The multilayer plate 100 of the assembly provides the first zone I and the second zone II, which comprise two different zones with differing cooling strengths. The cooling strength of the first zone I is higher than the cooling strength of the second zone II. If a hot food dish or a container with a hot dish is placed on the first zone I, the hot food dish or container will cool down faster. On the other hand, the hot food dish or the container with the hot food dish placed on the second zone II, will cool down slower. Shifting the container or the food dish from the first zone I to the second zone II, or vice versa, will influence the cooling-down process of the container or the food dish. For example, after the food dish is cooked and has a high temperature, the food dish could be placed directly on or in the container on the first zone I of the assembly to reach a first desired temperature. When the first desired temperature is reached, the food dish or the container with the food dish could be shifted to the second zone II until a second desired temperature is reached. The first desired temperature could be, for example, a temperature which stops the cooking process, and the second desired temperature could be, for example, a serving temperature.

In an aspect the metallic layer 20 of the assembly comprises an imprint such as a sign or a message, indicative of where to place the dish or container with the food dish on the metallic layer 20 for the higher or lower cooling-down strength.

In an aspect, the metallic layer 20 comprises a thermochromic imprint to indicate a specific temperature.

Fig. 4 illustrates a flow-chart of a method for demonstrating a differential thermal conductivity in the first zone I or the second zone II of the multilayer plate 100. In a first step S1 one or more body parts of the user is/are placed on one of the first zone I or the second zone II of the multilayer plate 100. In a second step S2 the same one or a different one of the one or more body parts is/are placed on a different one of the first zone I or the second zone II of the multilayer plate 100. In a third step S3 an effect of the placing of the one or more body parts on the first zone I and the second zone II is compared. The effect of the placing is, for example, the cooling effect of the first zone I compared to the second zone II, but this is not limiting of the invention.

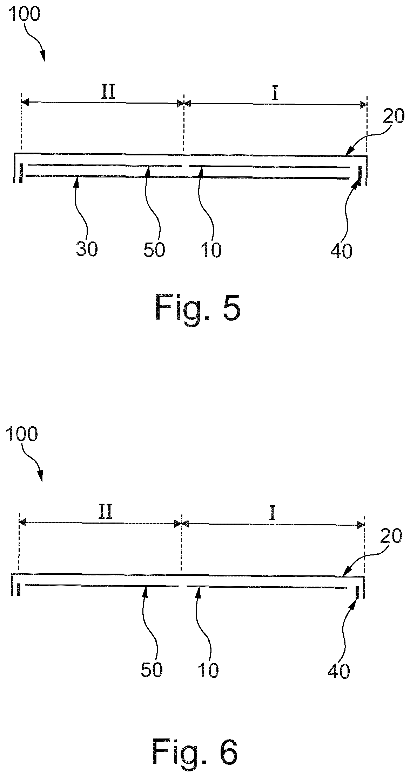

Fig. 5 illustrates a schematic cross-sectional view of another aspect of a multilayer plate 100. The same reference signs are used as for the multilayer plate 100 of Fig. 1 and similar features are not described in detail. The multilayer plate 100 further comprises an additional layer 50 defining the second zone II. The additional layer 50 is arranged besides the carbon layer 10 and between the substrate layer 30 and the metallic layer 20. The additional layer 50 is made of carboard or corrugated board but can alternatively be made of any other material providing similar rigidity and thermal conductivity as the cardboard or corrugated board. The additional layer 50 provides higher rigidity than the substrate layer 30 that is made of, for example, flexible foam. The metallic layer 20 is therefore better supported and is subject to less deformation if touched by a user. The risk of damage to the metallic layer 20 such as creases or dents due to deformation is therefore reduced by the additional layer 50. The additional layer 50 further provides low thermal conductivity and does therefore not reduce the cooling effect in the first zone I compared to the second zone II felt by a user.

Fig. 6 illustrates a schematic cross-sectional view of yet another aspect of a multilayer plate 100. The same reference signs are used as for the multilayer plate 100 of Fig. 5 and similar features are not described in detail. The multilayer plate 100 does not comprise a substrate layer 30. The low thermal conductivity of the additional layer 50 together with the high thermal conductivity of the carbon layer 10 provides the cooling effect in the first zone I compared to the second zone II felt by a user. An additional substrate layer 30 is not necessary in this configuration of the multilayer plate 100.

### Reference numbers

- 100: multilayer plate
- 10: carbon layer
- 12: first space
- 20: metallic layer
- 32: second space
- 30: substrate layer
- 31: recess
- 40: frame
- 41: circumferential surface
- 50: additional layer
- I: first zone
- II: second zone
- 301, 302, 303, 304, 305, 306, 307: dimensions
- S1, S2, S3: steps

## Claims

1. Multilayer plate (100), comprising:
a carbon layer (10), covered by a metallic layer (20),
a substrate layer (30), covered at least partially by the carbon layer (10) and the metallic layer (20), wherein the metallic layer (20) comprises a first zone (I) and a second zone (II) and wherein the first zone (I) is a zone defined by the carbon layer (10) and has a void first space (12) between the carbon layer (10) and the metallic layer (20), and the second zone (II) is a zone defined by carbon layer-free zone and has a void second space (32) between the substrate layer (30) and the metallic layer (20);
wherein the substrate layer (30) is made of a polyurethane flexible foam, wherein the first zone (I) has a higher thermal conductivity as the second zone (II).

2. Multilayer plate (100) according to claim 1, wherein
the carbon layer (10) is a graphite plate with a thickness in a range of 2 millimetres and 4 millimetres.

3. Multilayer plate (100) according to claim 1 or 2, wherein
the graphite plate comprises a highly oriented pyrolytic graphite.

4. Multilayer plate (100) according to any of the above claims, wherein
the metallic layer (20) has a thickness in a range of 0.05 millimetres to 0.1 millimetres.

5. Multilayer plate (100) according to any of the above claims, wherein
the metallic layer (20) is one of an aluminium foil, a copper foil or a steel foil.

6. Multilayer plate (100) according to any of the above claims, further comprising a frame (40) surrounding the substrate layer (30) and at least partially the carbon layer (10) for holding the substrate layer (30) and the carbon layer (10) in place.

7. Multilayer plate (100) according to any of the above claims, wherein
the metallic layer (20) is affixed on a circumferential surface (41) of the frame (40).

8. Multilayer plate (100) according any of the above claims, further comprising an additional layer (50) made of corrugated board and arranged next to the carbon layer 10, wherein
the second zone (II) is a zone defined by the additional layer (50).

9. Use of the multilayer plate according to the previous claims as a demonstration display for demonstrating a different thermal conductivity in a first zone (I) compared to a second zone (II).

10. A demonstration display for demonstrating a differential thermal conductivity in a first zone (I) or a second zone (II) comprising a multilayer plate (100) according to claim 1.

11. A method for demonstrating a differential thermal conductivity in a first zone (I) compared to a second zone (II) of a multilayer plate (10) according to claim 1 comprising:
- placing one or more body parts on one of the first zone (I) or the second zone (II);
- placing a same one or a different one of the one or more body parts on a different one of the first zone (I) or the second zone (II); and
- comparing the effect of the placing of the one or more body parts on the first zone (I) and the second zone (II).

## Patentansprüche

1. Mehrschichtige Platte (100), umfassend:
eine Kohlenstoffschicht (10), die von einer metallischen Schicht (20) bedeckt ist, eine Substratschicht (30), die zumindest teilweise von der Kohlenstoffschicht (10) und der metallischen Schicht (20) bedeckt ist, wobei die metallische Schicht (20) eine erste Zone (I) und eine zweite Zone (II) umfasst und wobei die erste Zone (I) eine Zone ist, die durch die Kohlenstoffschicht (10) definiert ist und einen ersten Hohlraum (12) zwischen der Kohlenstoffschicht (10) und der metallischen Schicht (20) aufweist, und die zweite Zone (II) eine Zone ist, die durch eine kohlenstoffschichtfreie Zone definiert ist und einen zweiten Hohlraum (32) zwischen der Substratschicht (30) und der metallischen Schicht (20) aufweist;
wobei die Substratschicht (30) aus einem flexiblen Polyurethanschaum hergestellt ist, wobei
die erste Zone (I) eine höhere Wärmeleitfähigkeit als die zweite Zone (II) aufweist.

2. Mehrschichtige Platte (100) nach Anspruch 1, bei welcher
die Kohlenstoffschicht (10) eine Graphitplatte mit einer Dicke in einem Bereich von 2 Millimetern und 4 Millimetern ist.

3. Mehrschichtige Platte (100) nach Anspruch 1 oder 2, bei welcher
die Graphitplatte einen hochorientierten pyrolytischen Graphit umfasst.

4. Mehrschichtige Platte (100) nach einem der vorhergehenden Ansprüche, bei welcher
die metallische Schicht (20) eine Dicke in einem Bereich von 0,05 Millimetern bis 0,1 Millimetern aufweist.

5. Mehrschichtige Platte (100) nach einem der vorhergehenden Ansprüche, bei welcher
die metallische Schicht (20) eine Aluminiumfolie, eine Kupferfolie oder eine Stahlfolie ist.

6. Mehrschichtige Platte (100) nach einem der vorhergehenden Ansprüche, weiter umfassend
einen Rahmen (40), der die Substratschicht (30) und zumindest teilweise die Kohlenstoffschicht (10) umgibt, um die Substratschicht (30) und die Kohlenstoffschicht (10) an ihrem Platz zu halten.

7. Mehrschichtige Platte (100) nach einem der vorhergehenden Ansprüche, bei welcher
die metallische Schicht (20) an einer Umfangsfläche (41) des Rahmens (40) befestigt ist.

8. Mehrschichtige Platte (100) nach einem der vorhergehenden Ansprüche, weiter umfassend
eine Zusatz-Schicht (50), die aus Wellpappe hergestellt ist und neben der Kohlenstoffschicht (10) angeordnet ist, wobei
die zweite Zone (II) eine Zone ist, die durch die Zusatz-Schicht (50) definiert ist.

9. Verwendung der mehrschichtigen Platte nach den vorhergehenden Ansprüchen als Vorführmodell zum Demonstrieren einer unterschiedlichen Wärmeleitfähigkeit in einer ersten Zone (I) im Vergleich zu einer zweiten Zone (II).

10. Vorführmodell zum Demonstrieren einer unterschiedlichen Wärmeleitfähigkeit in einer ersten Zone (I) oder einer zweiten Zone (II), das Vorführmodell umfassend eine mehrschichtige Platte (100) nach Anspruch 1.

11. Verfahren zum Demonstrieren einer unterschiedlichen Wärmeleitfähigkeit in einer ersten Zone (I) im Vergleich zu einer zweiten Zone (II) einer mehrschichtigen Platte (10) nach Anspruch 1, umfassend:
- Platzieren eines oder mehrerer Körperteile auf einer von der ersten Zone (I) oder der zweiten Zone (II);
- Platzieren eines gleichen oder eines anderen von dem einen oder den mehreren Körperteilen auf einer anderen von der ersten Zone (I) oder der zweiten Zone (II); und
- Vergleichen der Wirkung des Platzierens des einen oder der mehreren Körperteile auf der ersten Zone (I) und der zweiten Zone (II).

## Revendications

1. Plaque multicouche (100), comprenant :
une couche de carbone (10), recouverte par une couche métallique (20),
une couche de substrat (30), recouverte au moins partiellement par la couche de carbone (10) et la couche métallique (20), dans laquelle la couche métallique (20) comprend une première zone (I) et une deuxième zone (II) et dans laquelle la première zone (I) est une zone définie par la couche de carbone (10) et a un premier espace vide (12) entre la couche de carbone (10) et la couche métallique (20), et la deuxième zone (II) est une zone définie par une zone exempte de couche de carbone et a un deuxième espace vide (32) entre la couche de substrat (30) et la couche métallique (20) ;
dans laquelle la couche de substrat (30) est faite d'une mousse flexible de polyuréthane, dans laquelle la première zone (I) a une conductivité thermique plus élevée que la deuxième zone (II).

2. Plaque multicouche (100) selon la revendication 1, dans laquelle la couche de carbone (10) est une plaque de graphite avec une épaisseur dans une plage de 2 millimètres et 4 millimètres.

3. Plaque multicouche (100) selon la revendication 1 ou 2, dans laquelle la plaque de graphite comprend un graphite pyrolytique fortement orienté.

4. Plaque multicouche (100) selon l'une quelconque des revendications précédentes, dans laquelle la couche métallique (20) a une épaisseur dans une plage de 0,05 millimètre à 0,1 millimètre.

5. Plaque multicouche (100) selon l'une quelconque des revendications précédentes, dans laquelle la couche métallique (20) est l'une parmi une feuille d'aluminium, une feuille de cuivre ou une feuille d'acier.

6. Plaque multicouche (100) selon l'une quelconque des revendications précédentes, comprenant en outre un cadre (40) entourant la couche de substrat (30) et au moins partiellement la couche de carbone (10) pour maintenir en place la couche de substrat (30) et la couche de carbone (10).

7. Plaque multicouche (100) selon l'une quelconque des revendications précédentes, dans laquelle la couche métallique (20) est fixée sur une surface circonférentielle (41) du cadre (40).

8. Plaque multicouche (100) selon l'une quelconque des revendications précédentes, comprenant en outre une couche supplémentaire (50) faite de carton ondulé et agencée à côté de la couche de carbone (10), dans laquelle la deuxième zone (II) est une zone définie par la couche supplémentaire (50).

9. Utilisation de la plaque multicouche selon les revendications précédentes en tant qu'affichage de démonstration pour démontrer une conductivité thermique différente dans une première zone (I) comparée à une deuxième zone (II).

10. Affichage de démonstration pour démontrer une conductivité thermique différentielle dans une première zone (I) ou une deuxième zone (II) comprenant une plaque multicouche (100) selon la revendication 1.

11. Procédé pour démontrer une conductivité thermique différentielle dans une première zone (I) comparée à une deuxième zone (II) d'une plaque multicouche (10) selon la revendication 1, comprenant :
- placer une ou plusieurs parties de corps sur l'une de la première zone (I) ou de la deuxième zone (II) ;
- placer une même partie ou une partie différente des une ou plusieurs parties de corps sur une zone différente de la première zone (I) ou de la deuxième zone (II) ; et
- comparer l'effet du placement des une ou plusieurs parties de corps sur la première zone (I) et la deuxième zone (II).
